# EUROPEAN PATENT APPLICATION

(11) **EP 4 056 303 A1**
(43) Date of publication of application: **14.09.2022**
(21) Application number: 22160895.3
(22) Date of filing: 08.03.2022
(51) Int. Cl.: B22F 10/28, B22F 10/37, B22F 10/85, B22F 12/90, B33Y 10/00, B33Y 30/00, B33Y 50/02

(54) **THREE-DIMENSIONAL POWDER BED FUSION ADDITIVE MANUFACTURING APPARATUS AND THREE-DIMENSIONAL POWDER BED FUSION ADDITIVE MANUFACTURING METHOD**

(30) Priority: 10.03.2021 JP 2021038663
(71) Applicant: Jeol Ltd., Akishima-shi, Tokyo 196-8558 (JP)
(72) Inventor: HISAKI, Taku, Tokyo, 196-8558 (JP); KITAMURA, Shinichi, Tokyo, 196-8558 (JP); SATO, Takashi, Tokyo, 196-8558 (JP); MIYAKITA, Ayumu, Tokyo, 196-8558 (JP); KOIWA, Kozo, Tokyo, 196-8558 (JP); DAINO, Yohei, Tokyo, 196-8558 (JP); KAWAKAMI, Masahiko, Tokyo, 196-8558 (JP); TSUTAGAWA, Nari, Tokyo, 196-8558 (JP)
(74) Representative: Boult Wade Tennant LLP

(57) **Abstract**

To provide a technique capable of detecting occurrence of powder scattering and suppressing occurrence of defects in a manufactured object due to powder scattering.

A three-dimensional powder bed fusion additive manufacturing apparatus includes a determination unit (58) that determines presence or absence of powder scattering in a second preheating step using at least a third image that is an image of a powder layer (32a) photographed by a camera (42) after the second preheating step among a first image that is an image of the powder layer (32a) photographed by the camera (42) after a first preheating step, a second image that is an image of the powder layer (32a) photographed by the camera (42) after the powder application step, and the third image.

## Description

### BACKGROUND

### Technical Field

The present invention relates to a three-dimensional powder bed fusion additive manufacturing apparatus and a three-dimensional powder bed fusion additive manufacturing method.

### Related Art

In recent years, a three-dimensional powder bed fusion additive manufacturing (PBF-AM) apparatus is known which irradiates a powder material spread in layers on a build plate with a beam to melt and solidify the powder material, and sequentially stacks the solidified layers by moving the build plate to form a three-dimensional manufactured object. This type of three-dimensional PBF-AM apparatus is described in, for example, Patent Literature 1.

### Citation List

### Patent Literature

Patent Literature 1: JP 2015-193135 A

### SUMMARY

In the three-dimensional powder bed fusion additive manufacturing apparatus described in Patent Literature 1, when a metal powder as a powder material is irradiated with an electron beam, a phenomenon may occur in which individual powder particles are charged and powders are scattered in a smoke manner by Coulomb repulsive force (hereinafter, referred to as "powder scattering"). This phenomenon is also called smoke. When powder scattering occurs in a preheating step before the metal powder is sintered (melted and solidified), the laminated state of the metal powder is disturbed. When large-scale powder scattering occurs, it becomes difficult to continue the manufacturing work.

Furthermore, when the occurrence of powder scattering is suppressed to a small scale by some means or method, the manufacturing work can be continued. However, even in small-scale powder scattering, a defect may occur in the manufactured object if the manufacturing work is continued without confirming the state of the powder layer.

The present invention has been made to solve the above problems, and an object thereof is to provide a technique capable of detecting occurrence of powder scattering and suppressing occurrence of defects in a manufactured object due to powder scattering.

A three-dimensional powder bed fusion additive manufacturing apparatus according to the present invention includes: a build plate; a plate moving device that moves the build plate in an up-down direction; a powder application device that applies a powder material onto the build plate to form a powder layer; a beam irradiation device that irradiates the build plate or the powder layer with an electron beam; a control unit that controls the plate moving device, the powder application device, and the beam irradiation device to form a manufactured object for one layer through a plate lowering step, a first preheating step, a powder application step, a second preheating step, and a sintering step, and to form a three-dimensional manufactured object by laminating the manufactured object for one layer; a camera that photographs a manufactured surface of the powder layer to generate an image of the powder layer; and a determination unit that determines the presence or absence of powder scattering in the second preheating step using at least a third image that is an image of the powder layer photographed by the camera after the second preheating step and before the sintering step among a first image that is an image of the powder layer photographed by the camera after the first preheating step and before the powder application step, a second image that is an image of the powder layer photographed by the camera after the powder application step and before the second preheating step, and the third image.

A three-dimensional powder bed fusion additive manufacturing method according to the present invention includes: a first preheating step of preheating a build plate or a powder layer on the build plate; a powder application step of applying a powder material onto the build plate to form a powder layer after the first preheating step; a second preheating step of preheating the powder layer on the build plate after the powder application step; a sintering step of sintering the powder material forming the powder layer after the second preheating step; and a determination step of determining presence or absence of powder scattering in the second preheating step using at least a third image that is an image of the powder layer photographed by a camera after the second preheating step and before the sintering step among a first image that is an image of the powder layer photographed by the camera after the first preheating step and before the powder application step, a second image that is an image of the powder layer photographed by the camera after the powder application step and before the second preheating step, and the third image.

According to the present invention, it is possible to detect the occurrence of powder scattering and suppress the occurrence of defects in a manufactured object due to powder scattering.

### BRIEF DESCRIPTION OF DRAWINGS

FIG. 1 is a side view schematically showing a configuration of a three-dimensional powder bed fusion additive manufacturing (PBF-AM) apparatus according to a first embodiment of the present invention;
FIG. 2 is a block diagram showing a configuration example of a control system of the three-dimensional PBF-AM apparatus according to the first embodiment of the present invention;
FIG. 3 is a flowchart showing a procedure of a basic processing operation of the three-dimensional PBF-AM apparatus according to the first embodiment of the present invention;
FIG. 4 is a flowchart showing a procedure of a characteristic processing operation of the three-dimensional PBF-AM apparatus according to the first embodiment of the present invention;
FIG. 5 is a diagram schematically showing a first image, a second image, and a third image;
FIG. 6 is a flowchart showing a procedure of a characteristic processing operation of the three-dimensional PBF-AM apparatus according to a second embodiment of the present invention;
FIG. 7 is a flowchart showing a procedure of a characteristic processing operation of the three-dimensional PBF-AM apparatus according to a third embodiment of the present invention;
FIG. 8 is a view showing a state in which a path of an electron beam is blocked by a cloud of powder particles in a vacuum chamber;
FIG. 9 is a schematic side view showing an installation state of an illumination light source and a camera;
FIGS. 10A and 10B are diagrams for explaining a difference in the third image depending on the presence of absence of powder scattering;
FIG. 11 is a flowchart showing a procedure of a characteristic processing operation of the three-dimensional PBF-AM apparatus according to a fourth embodiment of the present invention;
FIG. 12 is a block diagram showing a configuration example of a control system of the three-dimensional PBF-AM apparatus according to a fifth embodiment of the present invention; and
FIG. 13 is a flowchart showing a procedure of a characteristic processing operation of the three-dimensional PBF-AM apparatus according to the fifth embodiment of the present invention.

### DETAILED DESCRIPTION

Hereinafter, embodiments of the present invention will be described in detail with reference to the drawings. In the present specification and the drawings, elements having substantially the same function or configuration are denoted by the same reference numerals, and redundant description is omitted.

### <First Embodiment>

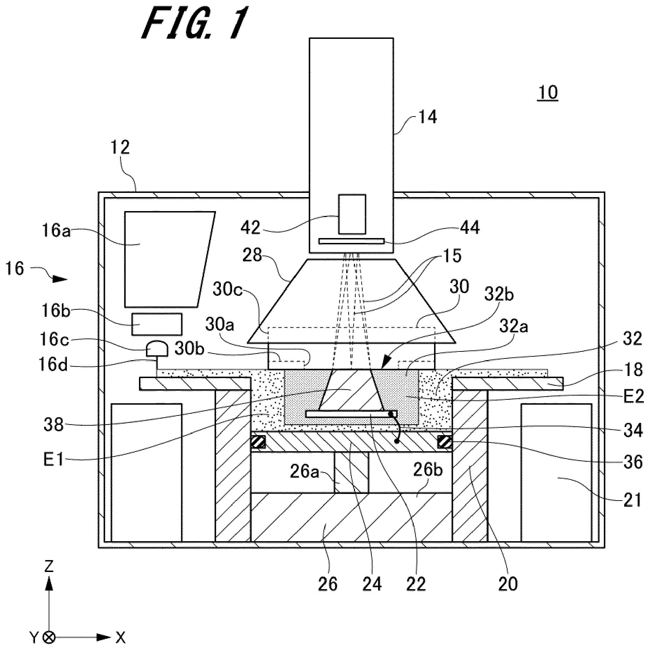

FIG. 1 is a side view schematically showing a configuration of a three-dimensional powder bed fusion additive manufacturing (PBF-AM) apparatus according to a first embodiment of the present invention. In the following description, in order to clarify the shape, positional relationship, and the like of each part of the three-dimensional PBF-AM apparatus, the right-left direction in FIG. 1 is referred to as an X direction, the depth direction in FIG. 1 is referred to as a Y direction, and the up-down direction in FIG. 1 is referred to as a Z direction. The X direction, the Y direction, and the Z direction are directions orthogonal to each other. The X direction and the Y direction are parallel to the horizontal direction, and the Z direction is parallel to the vertical direction.

As shown in FIG. 1, the three-dimensional PBF-AM apparatus 10 includes a vacuum chamber 12, a beam irradiation device 14, a powder application device 16, a build table 18, a build box 20, a collection box 21, a build plate 22, an inner base 24, a plate moving device 26, a radiation shield cover 28, an electron shield 30, a camera 42, and a shutter 44.

The vacuum chamber 12 is a chamber for creating a vacuum state by evacuating air in the chamber by a vacuum pump (not shown).

The beam irradiation device 14 is a device that irradiates the build plate 22 or a powder layer 32a with an electron beam 15. The powder layer 32a is a layer formed by applying metal powder 32 to the build plate 22. The state of the powder layer 32a changes as the three-dimensional PBF-AM process proceeds. Although not shown, the beam irradiation device 14 includes an electron gun that is a generation source of the electron beam 15, a focusing lens that focuses the electron beam generated by the electron gun, and a deflection lens that deflects the electron beam 15 focused by the focusing lens. The focusing lens is configured using a focusing coil, and focuses the electron beam 15 by a magnetic field generated by the focusing coil. The deflection lens is configured using a deflection coil, and deflects the electron beam 15 by a magnetic field generated by the deflection coil.

The powder application device 16 is a device that applies the metal powder 32 onto the build plate 22 to form the powder layer 32a as an example of a powder material as a raw material of a manufactured object 38. The powder application device 16 includes a hopper 16a, a powder dropping device 16b, and a squeegee 16c. The hopper 16a is a chamber for storing metal powder. The powder dropping device 16b is a device that drops the metal powder stored in the hopper 16a onto the build table 18. The squeegee 16c is an elongated member long in the Y direction, and includes a blade 16d for spreading powder. The squeegee 16c spreads the metal powder dropped by the powder dropping device 16b on the build table 18. The squeegee 16c is provided to be movable in the X direction in order to spread the metal powder over the entire surface of the build table 18.

The build table 18 is horizontally arranged inside the vacuum chamber 12. The build table 18 is arranged below the powder application device 16. A central portion of the build table 18 is opened. The opening shape of the build table 18 is a circle in plan view or a square in plan view (for example, a quadrangle in plan view).

The build box 20 is a box that forms a space for manufacturing. An upper end portion of the build box 20 is connected to an opening edge of the build table 18. A lower end portion of the build box 20 is connected to a bottom wall of the vacuum chamber 12.

The collection box 21 is a box that recovers the metal powder 32 supplied more than necessary among the metal powder 32 supplied onto the build table 18 by the powder application device 16.

The build plate 22 is a plate for forming the manufactured object 38 using the metal powder 32. The manufactured object 38 is formed by being laminated on the build plate 22. The build plate 22 is formed in a circle in plan view or a square in plan view in accordance with the opening shape of the build table 18. The build plate 22 is connected (grounded) to the inner base 24 by a ground wire 34 so as not to be in an electrically floating state. The inner base 24 is held at a ground (GND) potential. The metal powder 32 is spread over the build plate 22 and the inner base 24.

The inner base 24 is provided to be movable in the up-down direction (Z direction). The build plate 22 moves in the up-down direction integrally with the inner base 24. The inner base 24 has a larger outer dimension than the build plate 22. The inner base 24 slides in the up-down direction along the inner surface of the build box 20. A seal member 36 is attached to an outer peripheral portion of the inner base 24. The seal member 36 is a member that maintains slidability and sealability between the outer peripheral portion of the inner base 24 and the inner surface of the build box 20. The seal member 36 is made of a material having heat resistance and elasticity.

The plate moving device 26 is a device that moves the build plate 22 and the inner base 24 in the up-down direction. The plate moving device 26 includes a shaft 26a and a drive mechanism unit 26b. The shaft 26a is connected to the lower surface of the inner base 24. The drive mechanism unit 26b includes a motor and a power transmission mechanism (not shown), and drives the power transmission mechanism using the motor as a drive source to move the build plate 22 and the inner base 24 integrally with the shaft 26a in the up-down direction. The power transmission mechanism includes, for example, a rack and pinion mechanism, a ball screw mechanism, and the like.

The radiation shield cover 28 is arranged between the build plate 22 and the beam irradiation device 14 in the Z direction. The radiation shield cover 28 is made of metal such as stainless steel. The radiation shield cover 28 shields radiation heat generated when the metal powder 32 is irradiated with the electron beam 15 by the beam irradiation device 14. When the metal powder 32 is irradiated with the electron beam 15 in order to sinter the metal powder 32, the metal powder 32 is melted. At this time, when heat radiated from a manufactured surface 32b of the powder layer 32a, that is, radiant heat is widely diffused into the vacuum chamber 12, thermal efficiency is deteriorated. On the other hand, when the radiation shield cover 28 is arranged above the build plate 22, the heat radiated from the manufactured surface 32b is shielded by the radiation shield cover 28, and the shielded heat is reflected by the radiation shield cover 28 and returned to the build plate 22 side. Therefore, the heat generated by the irradiation of the electron beam 15 can be efficiently used. The manufactured surface 32b corresponds to the upper surface of the powder layer 32a.

In addition, the radiation shield cover 28 has a function of suppressing adhesion (vapor deposition) of an evaporation material generated when the metal powder 32 is irradiated with the electron beam 15 to the inner wall of the vacuum chamber 12. When the metal powder 32 is irradiated with the electron beam 15, a part of the melted metal becomes an atomized evaporation material and rises from the manufactured surface 32b. The radiation shield cover 28 is arranged so as to cover the space above the manufactured surface 32b so that the evaporation material does not diffuse into the vacuum chamber 12.

The electron shield 30 has an opening portion 30a and a mask portion 30b. In forming the manufactured object 38, the electron shield 30 is arranged to cover the upper surface of the metal powder 32, that is, the manufactured surface 32b. At this time, the opening portion 30a exposes the metal powder 32 spread on the build plate 22, and the mask portion 30b shields the metal powder 32 positioned outside the opening portion 30a. The shape of the opening portion 30a is set in accordance with the shape of the build plate 22. For example, if the build plate 22 is circular in plan view, the shape in plan view of the opening portion 30a is set to be circular accordingly, and if the build plate 22 is angular in plan view, the shape in plan view of the opening portion 30a is set to be angular accordingly.

The electron shield 30 is arranged below the radiation shield cover 28. The opening portion 30a and the mask portion 30b of the electron shield 30 are arranged between the build plate 22 and the radiation shield cover 28 in the Z direction. The electron shield 30 includes a surrounding portion 30c. The surrounding portion 30c is arranged so as to surround the space above the opening portion 30a. A part (upper portion) of the surrounding portion 30c overlaps the radiation shield cover 28 in the Z direction. The surrounding portion 30c has a function of shielding radiant heat generated from the manufactured surface 32b and a function of suppressing diffusion of an evaporation material generated from the manufactured surface 32b. That is, the surrounding portion 30c has the same function as the radiation shield cover 28.

The electron shield 30 is made of metal having a melting point higher than that of the metal powder 32 used as a raw material of the manufactured object 38. The electron shield 30 is made of a material having low reactivity with the metal powder 32. As a constituent material of the electron shield 30, for example, titanium can be exemplified. The electron shield 30 may be made of metal of the same material as the metal powder 32 to be used. The electron shield 30 is electrically grounded to GND. In a preheating step before a sintering step described later, when the metal powder 32 is calcined by irradiation with the electron beam 15, the electron shield 30 performs an electrical shielding function to suppress the occurrence of powder scattering to a small scale.

The camera 42 is a camera capable of photographing the manufactured surface 32b of the powder layer 32a. The camera 42 is arranged to be shifted in position in the Y direction from the beam irradiation device 14 so as not to interfere with the position of the beam irradiation device 14. The camera 42 is preferably a visible light camera such as a digital video camera. The camera 42 photographs the manufactured surface 32b of the powder layer 32a to generate an image (image data) of the powder layer 32a. Therefore, the image generated by the camera 42 is an image indicating the state of the manufactured surface 32b of the powder layer 32a. The photographing by the camera 42 is performed in a state where illumination light emitted from an illumination light source (not shown) included in the three-dimensional PBF-AM apparatus 10 is applied to the manufactured surface 32b of the powder layer 32a.

The shutter 44 protects an observation window so that the evaporation material generated from the manufactured surface 32b when the metal powder 32 is melted by the irradiation of the electron beam 15 does not adhere to the observation window. The photographing of the manufactured surface 32b by the camera 42 is performed in a state where the shutter 44 is opened. In addition, the step in which the evaporation material is likely to be generated and the step in which the amount of the evaporation material generated is large are performed in a state where the shutter 44 is closed. The observation window is attached to the vacuum chamber. The camera is set to the outside of the observation window (atmosphere side), and photographing of the manufactured surface by the camera is performed through the observation window.

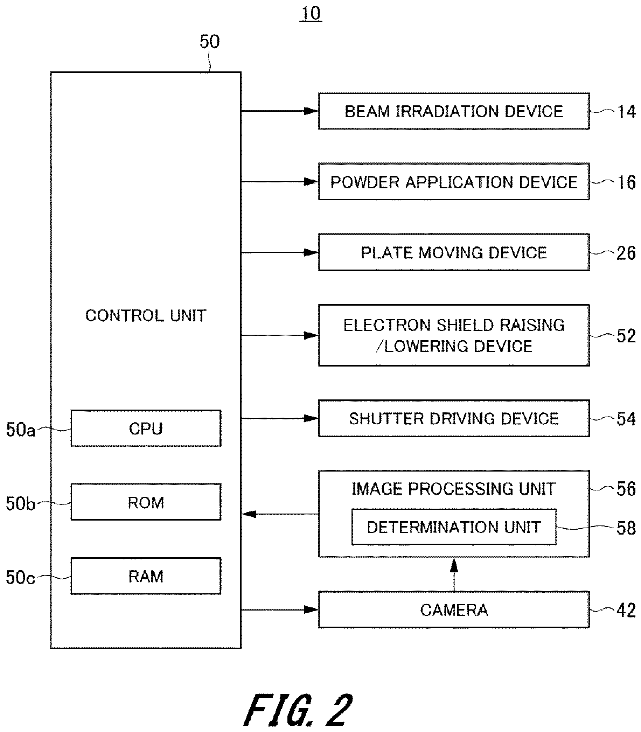

FIG. 2 is a block diagram showing a configuration example of a control system of the three-dimensional PBF-AM apparatus according to the first embodiment of the present invention.

In FIG. 2, a control unit 50 includes, for example, a central processing unit (CPU) 50a, a read only memory (ROM) 50b, and a random access memory (RAM) 50c (not shown), and the CPU 50a reads a program written in the ROM 50b into the RAM 50c and executes predetermined control processing, thereby integrally controlling the operation of the three-dimensional PBF-AM apparatus 10. In addition to the beam irradiation device 14, the powder application device 16, the plate moving device 26, and the camera 42 described above, an electron shield raising/lowering device 52, a shutter driving device 54, and an image processing unit 56 are connected to the control unit 50.

The plate moving device 26 moves the build plate 22 based on a control command given from the control unit 50. The powder application device 16 applies the metal powder 32 onto the build plate 22 based on a control command given from the control unit 50. The electron shield raising/lowering device 52 raises and lowers the electron shield 30 based on a control command given from the control unit 50. The shutter driving device 54 is a device that opens and closes the shutter 44 described above. The shutter driving device 54 opens and closes the shutter 44 based on a control command given from the control unit 50. For example, the shutter driving device 54 suppresses contamination of the observation window by holding the shutter 44 in a closed state in the sintering step described later based on a control command given from the control unit 50.

The image processing unit 56 takes in an image generated by the camera 42 and performs predetermined image processing on the captured image. The image processing unit 56 includes a determination unit 58 that determines the presence or absence of powder scattering (smoke) using the image generated by the camera 42. The image processing unit 56 includes, for example, an image processing processor. Specific processing contents performed by the image processing unit 56 and the determination unit 58 will be described later. The function of the image processing unit 56 may be realized by a CPU, a ROM, and a RAM constituting the control unit 50. That is, the image processing unit 56 can be configured integrally with the control unit 50.

### <Basic Operation of Three-Dimensional PBF-AM Apparatus>

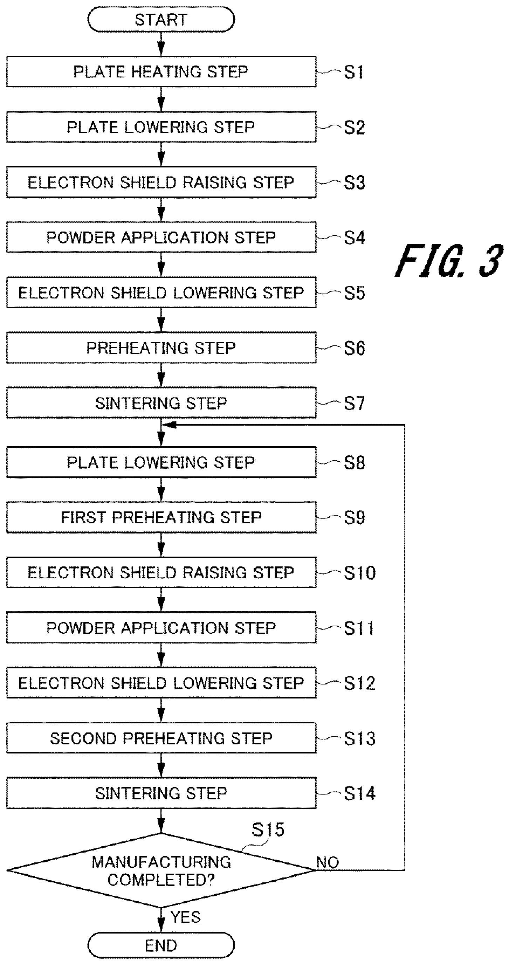

FIG. 3 is a flowchart showing a procedure of a basic processing operation of the three-dimensional PBF-AM apparatus according to the first embodiment of the present invention. The processing operation shown in this flowchart is performed under the control of the control unit 50. The characteristic processing operation of the three-dimensional PBF-AM apparatus according to the first embodiment of the present invention will be described later in association with the basic processing operation described below.

First, in a state before the manufacturing is started, the build plate 22 is covered with the metal powder 32 except for the upper surface of the build plate 22. Furthermore, the upper surface of the build plate 22 is arranged at substantially the same height as the upper surface of the metal powder 32 spread on the build table 18. On the other hand, the electron shield 30 is lowered to the upper surface of the build plate 22. In this case, the metal powder 32 present around the build plate 22 is covered by the mask portion 30b of the electron shield 30. The mask portion 30b is in contact with the metal powder 32. The manufacturing is started under the state described above.

### (Plate Heating Step)

First, the beam irradiation device 14 operates based on a control command given from the control unit 50 to heat the build plate 22 (step S1).

In step S1, the beam irradiation device 14 irradiates the build plate 22 with the electron beam 15 through the opening portion 30a of the electron shield 30, and scans the build plate 22 with the electron beam 15. Thus, the build plate 22 is heated to a temperature at which the metal powder 32 is calcined.

### (Plate Lowering Step)

Next, the plate moving device 26 operates based on a control command given from the control unit 50 to lower the build plate 22 by a predetermined amount (step S2).

In step S2, the plate moving device 26 lowers the inner base 24 by a predetermined amount so that the upper surface of the build plate 22 is slightly lower than the upper surface of the metal powder 32 spread on the build table 18. At this time, the build plate 22 lowers by a predetermined amount together with the inner base 24. The predetermined amount (hereinafter, also referred to as "ΔZ") described here corresponds to the thickness of one layer when the manufactured object 38 is built by laminating.

### (Electron Shield Raising Step)

Next, the electron shield raising/lowering device 52 operates based on a control command given from the control unit 50 to raise the electron shield 30 (step S3).

In step S3, the electron shield raising/lowering device 52 raises the electron shield 30 to a position higher than the squeegee 16c so that the squeegee 16c does not come into contact with the electron shield 30 in the next step S4.

### (Powder Application Step)

Next, the powder application device 16 operates based on a control command given from the control unit 50 to apply the metal powder 32 onto the build plate 22 to form the powder layer 32a (step S4).

In step S4, the powder application device 16 drops the metal powder 32 supplied from the hopper 16a to the powder dropping device 16b onto the build table 18 by the powder dropping device 16b, and then moves the squeegee 16c in the X direction to spread the metal powder 32 on the build plate 22. At this time, the metal powder 32 is spread on the build plate 22 with a thickness corresponding to ΔZ. Thus, the powder layer 32a is formed on the build plate 22. The excess metal powder 32 is recovered in the collection box 21.

### (Electron Shield Lowering Step)

Next, the electron shield raising/lowering device 52 operates based on a control command given from the control unit 50 to lower the electron shield 30 (step S5).

In step S5, the electron shield raising/lowering device 52 lowers the electron shield 30 so as to come into contact with the manufactured surface 32b of the metal powder 32. Thus, the metal powder 32 on the build plate 22 is exposed to the outside through the opening portion 30a of the electron shield 30. Further, the metal powder 32 present around the build plate 22 is covered by the mask portion 30b of the electron shield 30.

### (Preheating Step)

Next, the beam irradiation device 14 operates based on a control command given from the control unit 50 to preheat the powder layer 32a on the build plate 22 (step S6). In the preheating step S6, the powder layer 32a is preheated in order to calcine the metal powder 32. When the metal powder 32 is calcined, the metal powder 32 can have conductivity. Therefore, powder scattering in the sintering step performed after the preheating step can be suppressed. The preheating performed before the sintering step is also referred to as powder-heat.

In step S6, the beam irradiation device 14 irradiates the metal powder 32 on the build plate 22 with the electron beam 15. At this time, by covering the metal powder 32 with the electron shield 30 and radiating the electron beam 15, the occurrence of powder scattering in the preheating step S6 is suppressed by an electrical shielding effect of the electron shield 30. Furthermore, the beam irradiation device 14 scans an area wider than a region for forming the manufactured object 38 (hereinafter, also referred to as a "manufacturing region") with the electron beam 15. Thus, the metal powder 32 present in the manufacturing region and the metal powder 32 present around the manufacturing region are both calcined.

In FIG. 1, reference numeral E1 denotes a non-calcined region where the non-calcined metal powder 32 is present, and reference numeral E2 denotes a calcined region where the calcined metal powder 32 is present.

### (Sintering Step)

Next, the beam irradiation device 14 operates based on a control command given from the control unit 50 to sinter the metal powder 32 by melting and solidification (step S7) .

In step S7, the metal powder 32 as a calcined body is sintered by melting and solidifying the metal powder 32 calcined as described above by irradiation with the electron beam 15. In step S7, the beam irradiation device 14 specifies a manufacturing region based on twodimensional data obtained by slicing three-dimensional CAD data of a target manufactured object 38 to a constant thickness (thickness corresponding to ΔZ), and scans the manufacturing region with the electron beam 15 to selectively melt the metal powder 32 on the build plate 22. The metal powder 32 melted by the irradiation of the electron beam 15 is solidified after the electron beam 15 passes. Thus, the manufactured object in the first layer is formed.

### (Plate Lowering Step)

Next, the plate moving device 26 operates based on a control command given from the control unit 50 to lower the build plate 22 by a predetermined amount (ΔZ) (step S8).

In step S8, the plate moving device 26 lowers the build plate 22 and the inner base 24 by ΔZ.

### (First Preheating Step)

Subsequently, the beam irradiation device 14 operates based on a control command given from the control unit 50 to preheat the powder layer 32a on the build plate 22 (step S9). In the first preheating step S9, as a preparation for spreading the metal powder 32 in the next layer, the powder layer 32a that has been subjected to the sintering step in the previous layer is preheated. The preheating performed after the sintering step is also referred to as afterheating.

In step S9, the beam irradiation device 14 irradiates the powder layer 32a with the electron beam 15 through the opening portion 30a of the electron shield 30, and scans the powder layer 32a with the electron beam 15. As a result, the powder layer 32a exposed to the opening portion 30a is heated to a temperature at which the metal powder 32 is calcined.

### (Electron Shield Raising Step)

Next, the electron shield raising/lowering device 52 operates based on a control command given from the control unit 50 to raise the electron shield 30 (step S10).

In step S10, the electron shield raising/lowering device 52 raises the electron shield 30 to a position higher than the squeegee 16c so that the squeegee 16c does not come into contact with the electron shield 30 in the next step S11.

### (Powder Application Step)

Next, the powder application device 16 operates based on a control command given from the control unit 50 to apply the metal powder 32 onto the build plate 22 and form the powder layer 32a (step S11).

In step S11, the powder application device 16 operates similarly to step S4 described above. Thus, on the build plate 22, the metal powder 32 in the second layer is spread over the sintered body formed by the metal powder 32 in the first layer.

### (Electron Shield Lowering Step)

Next, the electron shield raising/lowering device 52 operates based on a control command given from the control unit 50 to lower the electron shield 30 (step S12).

In step S12, the electron shield raising/lowering device 52 operates similarly to step S5 described above.

### (Second Preheating Step)

Next, the beam irradiation device 14 operates based on a control command given from the control unit 50 to preheat the metal powder 32 forming the powder layer 32a in the second layer (step S13). In the second preheating step S13, the powder layer 32a is preheated in order to suppress powder scattering in the sintering step performed later.

In step S13, the beam irradiation device 14 operates similarly to step S6 described above. As a result, the metal powder 32 forming the powder layer 32a in the second layer is calcined.

### (Sintering Step)

Next, the beam irradiation device 14 operates based on a control command given from the control unit 50 to sinter the metal powder 32 forming the powder layer 32a in the second layer by melting and solidification (step S14).

In step S14, the beam irradiation device 14 operates similarly to step S7 described above. Thus, the manufactured object in the second layer is formed.

Next, the control unit 50 confirms whether the manufacturing of the target manufactured object 38 is completed (step S15). When determining that the manufacturing of the manufactured object 38 is not completed, the control unit 50 returns to step S8 described above. As a result, the control unit 50 performs again the processes of steps S8 to S14 described above for each of the third and subsequent layers. When it is determined that the manufacturing of the manufactured object 38 is completed, the series of processing is terminated at that time.

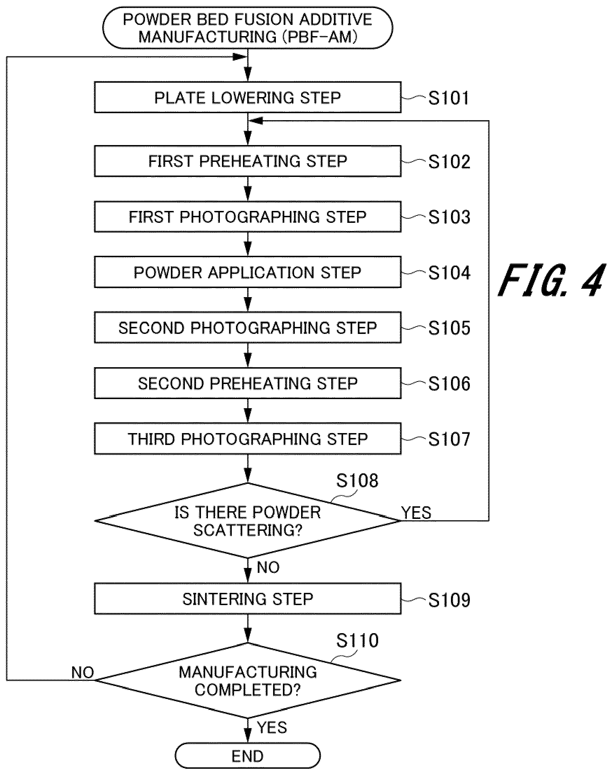

FIG. 4 is a flowchart showing a procedure of a characteristic processing operation of the three-dimensional PBF-AM apparatus according to the first embodiment of the present invention. This flowchart is applied after the manufactured object in the first layer is formed, that is, after step S7 in FIG. 3. In FIG. 4, an electron shield raising step and an electron shield lowering step are omitted.

### (Plate Lowering Step)

First, the plate moving device 26 operates based on a control command given from the control unit 50 to lower the build plate 22 by a predetermined amount (ΔZ) (step S101).

### (First Preheating Step)

Next, the beam irradiation device 14 operates based on a control command given from the control unit 50 to preheat the powder layer 32a on the build plate 22 (step S102).

### (First Photographing Step)

Next, the camera 42 photographs the manufactured surface 32b of the powder layer 32a, and outputs an image of the powder layer 32a generated by the photographing to the image processing unit 56 (step S103). The image photographed by the camera 42 in the first photographing step S103 is an image (hereinafter, referred to as a "first image") indicating the state of the manufactured surface 32b of the powder layer 32a after the first preheating step S102 described above and before the powder application step S104 described later. The first image is taken into the image processing unit 56.

### (Powder Application Step)

Next, the powder application device 16 operates based on a control command given from the control unit 50 to apply the metal powder 32 onto the build plate 22 and form the powder layer 32a (step S104). In the powder application step S104, the powder application device 16 operates similarly to step S4 described above. Thus, on the build plate 22, the metal powder 32 in the next layer is spread over the sintered body formed by the metal powder 32 in the previous layer.

### (Second Photographing Step)

Next, the camera 42 photographs the manufactured surface 32b of the powder layer 32a, and outputs an image of the powder layer 32a generated by the photographing to the image processing unit 56 (step S105). The image photographed by the camera 42 in the second photographing step S105 is an image (hereinafter, referred to as a "second image") indicating the state of the manufactured surface 32b of the powder layer 32a after the powder application step S104 describe above and before the second preheating step S106 described later. The second image is taken into the image processing unit 56.

### (Second Preheating Step)

Next, the beam irradiation device 14 operates based on a control command given from the control unit 50 to preheat the metal powder 32 forming the current layer (powder layer 32a) (step S106).

### (Third Photographing Step)

Next, the camera 42 photographs the manufactured surface 32b of the powder layer 32a, and outputs an image of the powder layer 32a generated by the photographing to the image processing unit 56 (step S107). The image photographed by the camera 42 in the third photographing step S107 is an image (hereinafter, referred to as a "third image") indicating the state of the manufactured surface 32b of the powder layer 32a after the second preheating step S106 described above and before the sintering step S109 described later. The third image is taken into the image processing unit 56.

### (Determination Step)

Next, the determination unit 58 of the image processing unit 56 determines the presence or absence of powder scattering in the second preheating step S106 using the first image, the second image, and the third image described above (step S108). A specific determination method will be described below. However, the determination method is not limited to the method described below.

First, the image processing unit 56 converts each of the first image, the second image, and the third image into a differential image by passing each of the first image, the second image, and the third image through a first differential filter. As a result, a differential image of the first image, a differential image of the second image, and a differential image of the third image are obtained. Next, the image processing unit 56 calculates a correlation coefficient A between the differential image of the first image and the differential image of the third image, and calculates a correlation coefficient B between the differential image of the second image and the differential image of the third image. The correlation coefficient A corresponds to a comparison result between the first image and the third image, and the correlation coefficient B corresponds to a comparison result between the second image and the third image. The correlation coefficient A is a coefficient indicating the degree of similarity between the first image and the third image, and takes a larger value as the degree of similarity between the first image and the third image is higher. Similarly, the correlation coefficient B is a coefficient indicating the degree of similarity between the second image and the third image, and takes a larger value as the degree of similarity between the second image and the third image is higher.

Next, the determination unit 58 compares the magnitude relationship between the correlation coefficient A and the correlation coefficient B. If the correlation coefficient A is greater than or equal to the correlation coefficient B, that is, if the third image is more similar to the first image than or equal to the second image, the determination unit 58 determines that powder scattering has occurred in the second preheating step S106 (determined as YES in step S108). If the correlation coefficient A is less than the correlation coefficient B, that is, if the third image is more similar to the second image than the first image, the determination unit 58 determines that powder scattering has not occurred in the second preheating step S106 (determined as NO in step S108).

The reason why each of the first image, the second image, and the third image is converted into a differential image is to eliminate the difference in average intensity between the images and to evaluate the similarity between the images only by the intensity gradient of the adjacent pixel.

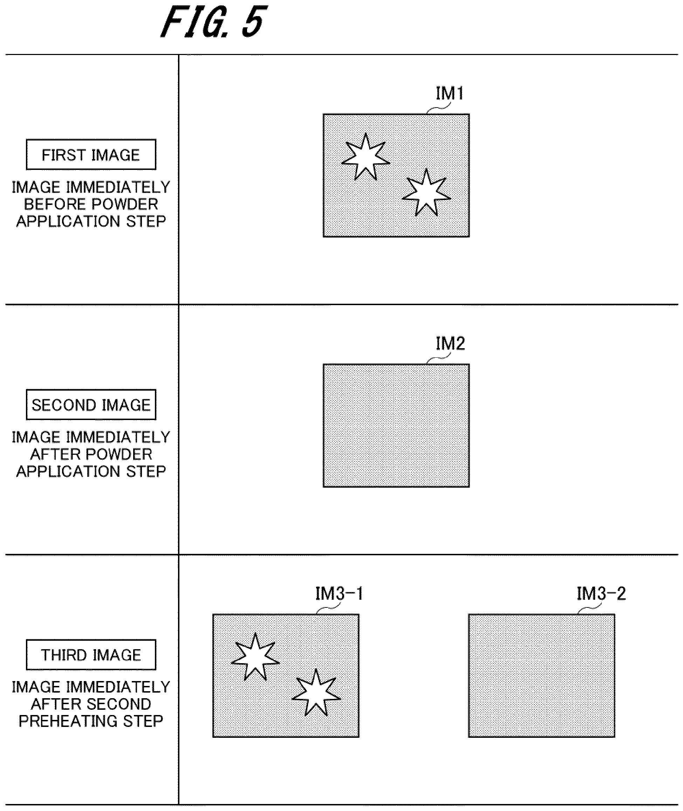

FIG. 5 is a diagram schematically showing the first image, the second image, and the third image.

As shown in FIG. 5, a first image IM1 indicates the state of the manufactured surface 32b before the powder application step S104, and at this stage, the manufacturing region (in the figure, a star-shaped region) is sintered, and the other region is a calcined region. Therefore, the outline of the manufacturing region appears in the first image IM1.

On the other hand, a second image IM2 indicates the state of the manufactured surface 32b after the powder application step S104, and at this stage, the manufacturing region and the calcined region are covered with the powder layer 32a. Therefore, the outline of the manufacturing region does not appear in the second image IM2.

A third image IM3 (IM3-1, IM3-2) indicates the state of the manufactured surface 32b after the second preheating step S106. The third images IM3 are different images IM3-1 and IM3-2 when powder scattering occurs and does not occur in the second preheating step S106. Specifically, when powder scattering occurs in the second preheating step S106, the underlying layer appears due to powder scattering as shown in the third image IM3-1, so that the outline of the manufacturing region appears. On the other hand, when powder scattering does not occur in the second preheating step S106, the manufacturing region and the calcined region remain covered with the powder layer 32a as shown in the third image IM3-2, and thus the contour of the manufacturing region does not appear.

Therefore, when the third image IM3 is more similar to the first image IM1 than or equal to the second image IM2, the determination unit 58 determines that powder scattering has occurred in the second preheating step S106, and when the third image IM3 is more similar to the second image IM2 than the first image IM1, the determination unit 58 determines that powder scattering has not occurred in the second preheating step S106. When it is determined as YES in step S108, the process returns to step S102 described above, and when it is determined as NO in step S108, the process proceeds to the next step S109.

When the process returns from step S108 to step S102, the control unit 50 performs the first preheating step S102, the first photographing step S103, the powder application step S104, the second photographing step S105, the second preheating step S106, and the third photographing step S107 again for the current layer manufacturing. That is, the control unit 50 performs the processes of steps S102 to S107 again for the current layer manufacturing.

### (Sintering Step)

Next, the beam irradiation device 14 operates based on a control command given from the control unit 50 to sinter the metal powder 32 forming the current layer by melting and solidification (step S109).

Next, the control unit 50 confirms whether the manufacturing of the target manufactured object 38 is completed (step S110). When determining that the manufacturing of the manufactured object 38 is not completed, the control unit 50 returns to Step S101 described above. As a result, the control unit 50 performs again the processes of steps S101 to S109 described above for each of the next and subsequent layers. When it is determined that the manufacturing of the manufactured object 38 is completed, the series of processing is terminated at that time.

The photographing of the manufactured surface 32b by the camera 42 may be performed only in the first photographing step S103, the second photographing step S105, and the third photographing step S107, or may be continuously performed unless the shutter driving device 54 closes the shutter 44 after the control unit 50 turns on power of the camera 42 at the start of the operation of the three-dimensional PBF-AM apparatus 10. In the latter case, the manufactured surface 32b of the powder layer 32a at each of the first photographing step S103, the second photographing step S105, and the third photographing step S107 is photographed by the camera 42.

As described above, in the three-dimensional PBF-AM apparatus 10 according to the first embodiment of the present invention, the determination unit 58 determines the presence or absence of powder scattering in the second preheating step S106 in the determination step S108 using the first image photographed by the camera 42 immediately before the powder application step S104, the second image photographed by the camera 42 immediately after the powder application step S104, and the third image photographed by the camera 42 immediately after the second preheating step S106. Thus, the occurrence of powder scattering can be automatically detected. Furthermore, when it is determined in the determination step S108 that there is powder scattering, the manufacturing work after the powder scattering occurs can be suitably continued by operating the three-dimensional PBF-AM apparatus 10 in a mode different from the basic processing operation (see FIG. 3) described above. As a result, it is possible to suppress the occurrence of defects in the manufactured object due to powder scattering.

In the first embodiment of the present invention, when it is determined by the determination unit 58 that there is powder scattering, the control unit 50 performs the first preheating step S102, the powder application step S104, and the second preheating step S106 again before performing the sintering step S109 for the current layer manufacturing. As a result, even when the laminated state of the powder layer 32a is disturbed by the occurrence of powder scattering in the second preheating step S106, the laminated state of the powder layer 32a can be recovered to a favorable state by performing the first preheating step S102, the powder application step S104, and the second preheating step S106 again, and the sintering step S109 can be performed in this state. Therefore, it is possible to suppress the occurrence of defects in the manufactured object.

In the first embodiment, the characteristic processing operation applied after step S7 in FIG. 3 has been described, but the present invention is not limited thereto, and the characteristic processing operation can be applied before step S7 in FIG. 3. In this case, the plate heating step S1 corresponds to the first preheating step, and the preheating step S6 corresponds to the second preheating step. The same applies to other embodiments described later.

### <Second Embodiment>

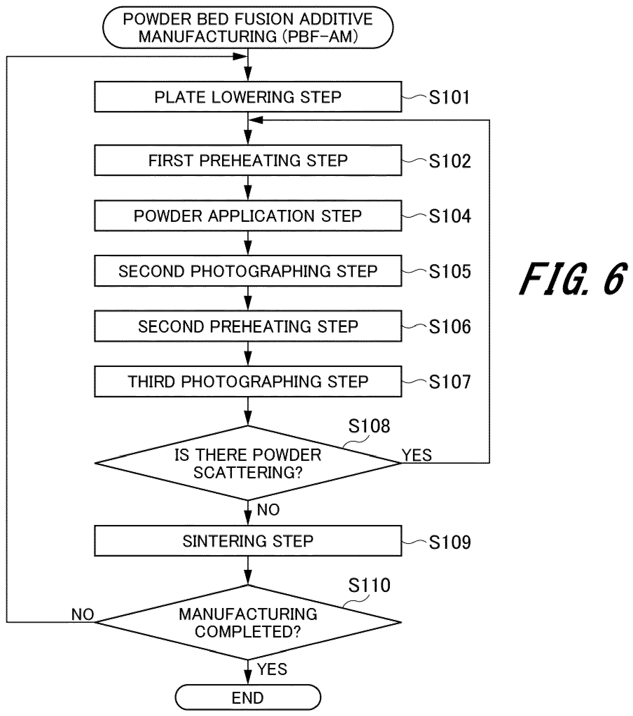

FIG. 6 is a flowchart showing a procedure of a characteristic processing operation of the three-dimensional PBF-AM apparatus according to a second embodiment of the present invention.

As shown in FIG. 6, the second embodiment of the present invention is different from the processing operation of the first embodiment (see FIG. 4) described above in that the first photographing step S103 is omitted and the determination method in the determination step S108 is different.

In the determination step S108, the determination unit 58 determines the presence or absence of powder scattering in the second preheating step S106 based on a comparison result between the second image photographed by the camera 42 in the second photographing step S105 and the third image photographed by the camera 42 in the third photographing step S107.

Specifically, first, the image processing unit 56 converts each of the second image and the third image into a differential image by passing each of the second image and the third image through a first differential filter. As a result, a differential image of the second image and a differential image of the third image are obtained. Next, the image processing unit 56 calculates a correlation coefficient between the differential image of the second image and the differential image of the third image. The correlation coefficient corresponds to a comparison result between the second image and the third image. The correlation coefficient is a coefficient indicating the degree of similarity between the second image and the third image, and takes a larger value as the degree of similarity between the second image and the third image is higher. Next, the determination unit 58 compares the correlation coefficient calculated as described above with a preset threshold. When the correlation coefficient is less than the threshold, the determination unit 58 determines that powder scattering has occurred in the second preheating step S106 (determined as YES in step S108). When the correlation coefficient is equal to or larger than the threshold, the determination unit 58 determines that powder scattering has not occurred in the second preheating step S106 (determined as NO in step S108).

As described above, even in a case where the first photographing step S103 is omitted and the determination method in the determination step S108 is changed, effects similar to those of the first embodiment can be obtained.

### <Third Embodiment>

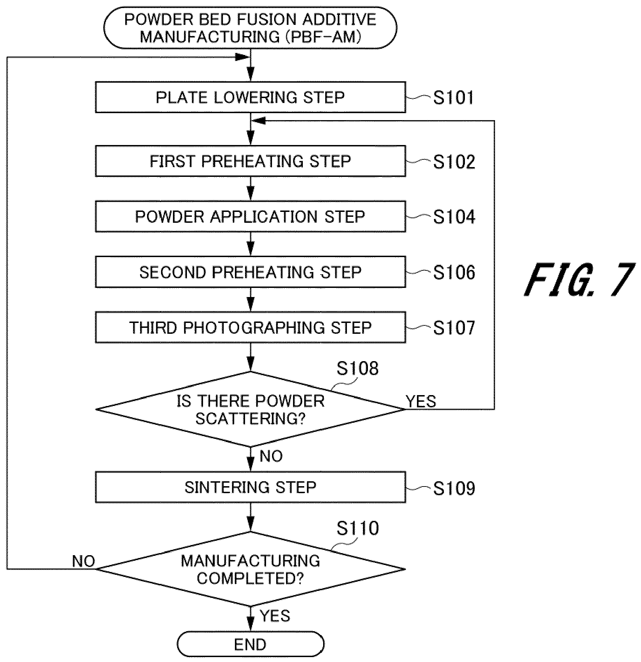

FIG. 7 is a flowchart showing a procedure of a characteristic processing operation of the three-dimensional PBF-AM apparatus according to a third embodiment of the present invention.

As shown in FIG. 7, the third embodiment of the present invention is different from the processing operation of the first embodiment (see FIG. 4) described above in that the first photographing step S103 and the second photographing step S105 are omitted and the determination method in the determination step S108 is different.

In the determination step S108, the determination unit 58 determines the presence or absence of powder scattering in the second preheating step S106 based on the third image photographed by the camera 42 in the third photographing step S107. Although several methods for determining the presence or absence of powder scattering using only the third image are conceivable, two methods will be exemplified here.

### (First Method)

In the third photographing step S107, the manufactured surface 32b of the powder layer 32a is photographed by the camera 42 in a state where the output of the electron beam 15 is set to 0 after the second preheating step S106. When powder scattering does not occur in the second preheating step S106, the manufactured surface 32b is heated to a predetermined temperature by irradiation of the electron beam 15 by the beam irradiation device 14. Therefore, the manufactured surface 32b that is sufficiently red-heated is displayed in the third image.

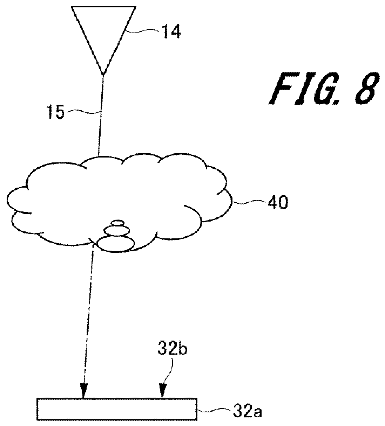

On the other hand, when powder scattering occurs in the second preheating step S106, as shown in FIG. 8, the path of the electron beam 15 is blocked by a cloud 40 of powder particles temporarily floating in the vacuum chamber 12 during powder scattering. Therefore, the energy of the electron beam 15 reaching the manufactured surface 32b decreases as compared with the case where powder scattering does not occur. Then, the manufactured surface 32b is not heated to a predetermined temperature. Therefore, in the third image, the manufactured surface 32b in a relatively dark state that is not sufficiently red-heated is displayed.

That is, the intensity of the third image is low when powder scattering occurs in the second preheating step S106, and is high when powder scattering does not occur.

Therefore, in the determination step S108, the determination unit 58 acquires in advance correlation data indicating a correlation between the execution time of the second preheating step S106 and the intensity of the image (third image) obtained by photographing the manufactured surface 32b of the powder layer 32a with the camera 42 immediately after the second preheating step S106 as preparation for actually determining the presence or absence of powder scattering. The execution time of the second preheating step S106 is a time from the start to the end of the irradiation (scanning) of the electron beam 15. The intensity of the third image immediately after the second preheating step S106 increases as the execution time of the second preheating step S106 increases. For this reason, the determination unit 58 compares the intensity of the image immediately after the second preheating step S106 predicted from the correlation data with the intensity of the third image actually photographed by the camera 42 immediately after the second preheating step S106. Then, the determination unit 58 determines that powder scattering has not occurred when the difference in the intensity is within a preset allowable value, and determines that powder scattering has occurred when the difference exceeds the allowable value. The correlation data can be sequentially added or updated as the three-dimensional PBF-AM progresses.

### (Second Method)

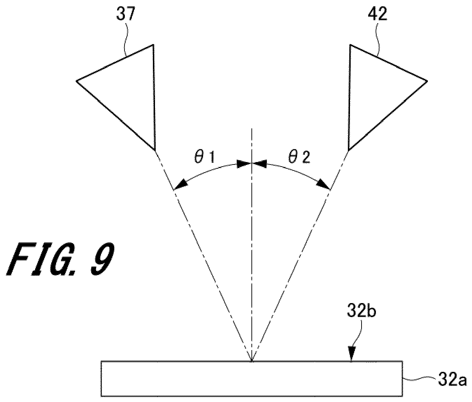

In a second method, as shown in FIG. 9, an illumination light source 37 and the camera 42 are installed on the manufactured surface 32b. Specifically, the illumination light source 37 and the camera 42 are installed such that illumination light enters the manufactured surface 32b from the illumination light source 37 at an angle θ1, and the light reflected from the manufactured surface 32b at an angle θ2 (θ1 = θ2) is taken into the camera 42.

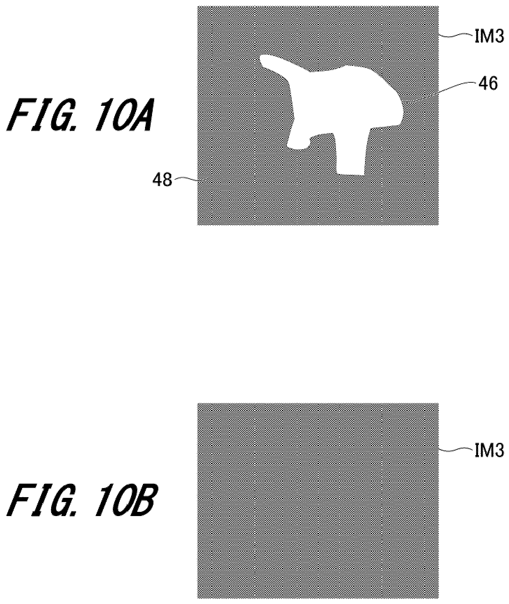

When powder scattering occurs in the second preheating step S106, the metal powder applied in the previous powder application step S104 is blown off and removed, so that the upper surface of the sintered body sintered in the previous layer is exposed as a glossy surface. Therefore, in the third image IM3 photographed by the camera 42, as shown in FIG. 10A, a portion 46 sintered in the previous layer is brightly displayed by reflection of the illumination light, and a portion 48 as calcined, which is the other portion, absorbs the illumination light or/and is randomly scattered and darkly displayed in all directions.

On the other hand, when powder scattering does not occur in the second preheating step S106, the metal powder applied in the previous powder application step S104 remains, so that the upper surface of the sintered body sintered in the previous layer, that is, the glossy surface is not exposed. Therefore, as shown in FIG. 10B, the metal powder applied in the powder application step S104 is uniformly and darkly displayed on the third image IM3 photographed by the camera 42.

That is, the third image IM3 becomes a partially bright image when powder scattering occurs in the second preheating step S106, and becomes a uniformly dark image when powder scattering does not occur.

Therefore, for photographing the manufactured surface 32b, for example, the camera 42 set to a detection sensitivity optimized for photographing the upper surface (glossy surface) of the sintered body is used. Specifically, the detection sensitivity of the camera 42 is set such that the upper surface of the sintered body is displayed white by reflection of the illumination light.

On the other hand, in the determination step S108, the determination unit 58 determines the presence or absence of powder scattering based on the occurrence status of the overexposure pixels in the third image photographed by the camera 42. The overexposure pixel refers to a pixel in which overexposure has occurred among a plurality of pixels constituting the third image. When the number of occurrence of the overexposure pixels is close to the number of pixels corresponding to the area sintered in the previous layer, or when the position and shape of the overexposure range are similar to the position and shape sintered in the previous layer, the determination unit 58 determines that powder scattering has occurred, and otherwise, determines that powder scattering has not occurred.

As described above, even in a case where the first photographing step S103 and the second photographing step S105 are omitted and the determination method in the determination step S108 is changed, effects similar to those of the first embodiment can be obtained.

In the first embodiment, the second embodiment, and the third embodiment described above, a machine learning algorithm based on artificial intelligence can also be applied to the determination method adopted in the determination step S018. As an example, in the third embodiment, a learning model functioning as the determination unit 58 is created by inputting a large number of images of the powder layer 32a when powder scattering occurs and images of the powder layer 32a when powder scattering does not occur in the second preheating step S106 to the image processing unit 56 as labeled data (training data). Then, in the determination step S108, the third image photographed by the camera 42 in the previous third photographing step S107 is input to the image processing unit 56, and the presence or absence of powder scattering is determined by the learning model.

### <Fourth Embodiment>

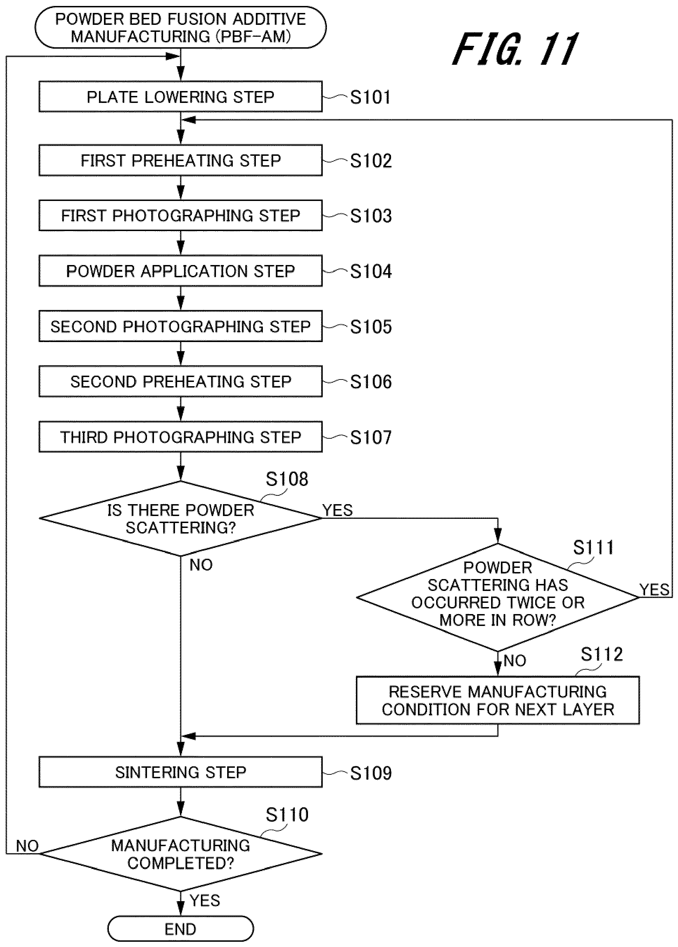

FIG. 11 is a flowchart showing a procedure of a characteristic processing operation of the three-dimensional PBF-AM apparatus according to a fourth embodiment of the present invention.

As shown in FIG. 11, in the fourth embodiment of the present invention, as compared with the processing operation of the above-described first embodiment (see FIG. 4), the flow of processing from step S101 to step S110 is the same, but the flow of processing after it is determined as YES in step S108 is different.

Specifically, when it is determined as YES in step S108, the process proceeds to step S111. In step S111, the control unit 50 checks whether it is determined by the determination unit 58 that there is powder scattering for the current layer manufacturing twice or more in a row. When it is determined by the determination unit 58 that there is powder scattering for the current layer manufacturing twice or more in a row, the control unit 50 returns from step S111 to step S102. In this case, the control unit 50 performs the first preheating step S102, the first photographing step S103, the powder application step S104, the second photographing step S105, the second preheating step S106, and the third photographing step S107 again for the current layer manufacturing without performing step S112 described later.

On the other hand, when it is not determined by the determination unit 58 that there is powder scattering for the current layer manufacturing twice or more in a row, that is, when the number of times it is determined by the determination unit 58 that there is powder scattering is once (first time), the control unit 50 proceeds from step S111 to step S112.

Next, in step S112, the control unit 50 reserves a condition to be applied to the next layer manufacturing. The condition to be applied to the next layer manufacturing is reserved with a content different from a condition to be applied when there is no powder scattering (hereinafter, also referred to as a "normal condition"). Specifically, the control unit 50 performs a reservation for extending the execution time of the first preheating step S102, and a reservation for enhancing the energy applied to the powder layer 32a in the sintering step S109. The execution time of the first preheating step S102 is a time from the start to the end of the irradiation (scanning) of the electron beam 15 in the first preheating step S102. When the execution time of the first preheating step S102 is extended, the irradiation time of the electron beam 15 becomes longer as compared with the case where the normal condition is applied, and the temperature of the powder layer 32a becomes higher accordingly. Therefore, instead of the reservation for extending the execution time of the first preheating step S102, a reservation for setting the heating target temperature of the first preheating step S102 higher than the normal condition may be made.

As a method for enhancing the energy applied to the powder layer 32a in the present sintering step S109, for example, the following methods (a), (b), and (c) can be considered.
(a) The beam current of the electron beam 15 with which the powder layer 32a is irradiated in the sintering step S109 is made larger than that under the normal condition.
(b) The scanning speed of the electron beam 15 with which the powder layer 32a is irradiated in the sintering step S109 is made lower than that under the normal condition.
(c) The above (a) and (b) are performed simultaneously.

In step S112, the control unit 50 may perform all of the reservation for extending the execution time of the first preheating step S102, the reservation for increasing the heating target temperature of the first preheating step S102, and the reservation for enhancing the energy applied to the powder layer 32a in the sintering step S109, or may perform any two or any one of the reservations. In addition, the condition reserved in step S112 may be applied not only to the next layer but also continuously applied to two or more layers including the next layer.

Next, after performing the sintering step S109 for the current layer, the control unit 50 returns to step S101 through the confirmation of step S110, and performs the processes of steps S101 to S109 for the next layer. At that time, in the first preheating step S102, the execution time and/or the heating target temperature reserved in step S112 described above are applied. In the sintering step S109, the metal powder 32 is sintered with the energy reserved in step S112 described above.

As described above, in the fourth embodiment of the present invention, when it is determined by the determination unit 58 that there is powder scattering, the control unit 50 reserves the condition to be applied to the next layer manufacturing with a content different from the condition to be applied when there is no powder scattering, and then performs the sintering step S109 for the current layer manufacturing. Then, for the next layer manufacturing, the control unit 50 performs the plate lowering step S101, the first preheating step S102, the powder application step S104, the second preheating step S106, and the sintering step S109 according to the reserved condition.

Thus, the manufacturing throughput can be improved as compared with the first embodiment, the second embodiment, and the third embodiment described above. The reason is as follows.

First, in the first embodiment, the second embodiment, and the third embodiment described above, when it is determined by the determination unit 58 that there is powder scattering in the determination step S108, the first preheating step S102, the powder application step S104, and the second preheating step S106 are performed again for the current layer manufacturing. Performing the step as described above leads to a decrease in manufacturing throughput while an effect of suppressing the occurrence of defects by recovering the laminated state of the powder layer 32a is obtained. On the other hand, in the fourth embodiment, when it is determined by the determination unit 58 that there is powder scattering in the determination step S108, the sintering step S109 is performed for the current layer manufacturing after the condition to be applied to the next layer manufacturing is reserved. Therefore, it is possible to suppress a decrease in manufacturing throughput caused when the step is performed again.

Furthermore, by carrying out the next layer manufacturing according to the reserved condition, it is possible to appropriately cope with the change in thickness of the powder layer 32a accompanying the powder scattering. More specifically, when powder scattering occurs in the second preheating step S106 in the current layer manufacturing, the thickness of the powder layer 32a becomes partially or entirely thin. Therefore, when the powder application step S104 is performed for the next layer manufacturing, the metal powder 32 is applied thickly so as to compensate for the thinness of the previous layer. In such a case, when manufacturing is performed with the same content as the normal condition, insufficient heating occurs in the first preheating step S102, or energy shortage occurs in the sintering step S109. In the fourth embodiment, as the reservation for the condition to be applied to the next layer manufacturing, reservation for extending the execution time of the first preheating step S102, and reservation for enhancing the energy applied to the powder layer 32a in the sintering step S109 are performed. Therefore, insufficient heating in the first preheating step S102, and insufficient energy in the sintering step S109 can be avoided. Therefore, it is possible to appropriately cope with the change in the thickness of the powder layer 32a accompanying the powder scattering. Furthermore, the laminating of the manufactured object can be restored to a favorable state without performing the step again.

In the fourth embodiment, when it is determined by the determination unit 58 that there is powder scattering twice or more in a row, the control unit 50 performs the first preheating step S102, the powder application step S104, and the second preheating step S106 again for the current layer manufacturing without reserving the condition to be applied to the next layer manufacturing. Thus, even if it cannot be recovered by changing the manufacturing condition, the laminated state of the powder layer 32a can be recovered by performing the step again.

Although not shown, when the number of times of YES determination in step S108 for the same layer reaches a predetermined number of times N (N is an integer larger than 2), there is a possibility that a defect has occurred in the three-dimensional PBF-AM apparatus 10, and in this case, it is preferable to stop the operation of the three-dimensional PBF-AM apparatus 10 for device maintenance. The same applies to the first embodiment, the second embodiment, and the third embodiment described above.

### <Fifth Embodiment>

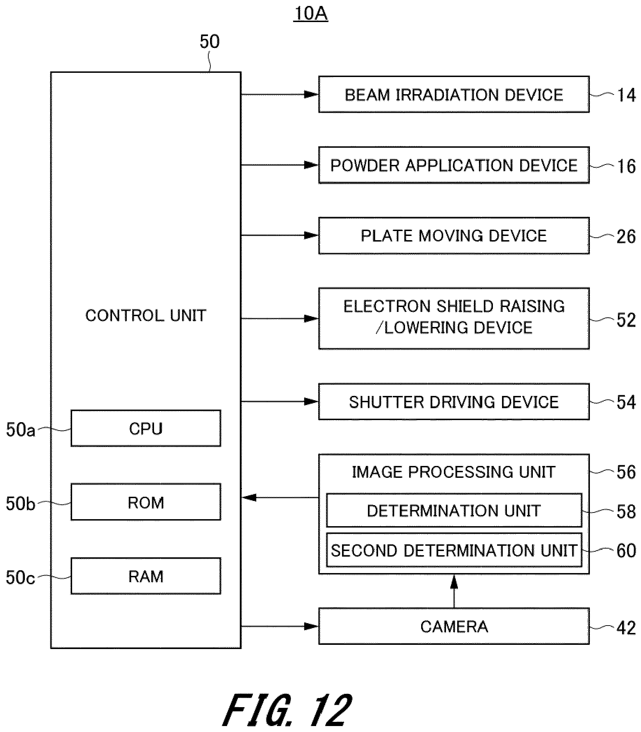

FIG. 12 is a block diagram showing a configuration example of a control system of a three-dimensional PBF-AM apparatus according to a fifth embodiment of the present invention.

A three-dimensional PBF-AM apparatus 10A according to the fifth embodiment of the present invention is different from the configuration (FIG. 2) of the control system of the three-dimensional PBF-AM apparatus 10 according to the first embodiment described above in that the image processing unit 56 includes a second determination unit 60. Similarly to the determination unit 58 described above, the second determination unit 60 determines the presence or absence of powder scattering using the image generated by the camera 42, but the photographing timing of the image used for determination is different. Specifically, the second determination unit 60 determines the presence or absence of powder scattering in the sintering step using a fourth image that is an image of the powder layer 32a photographed by the camera 42 after the sintering step.

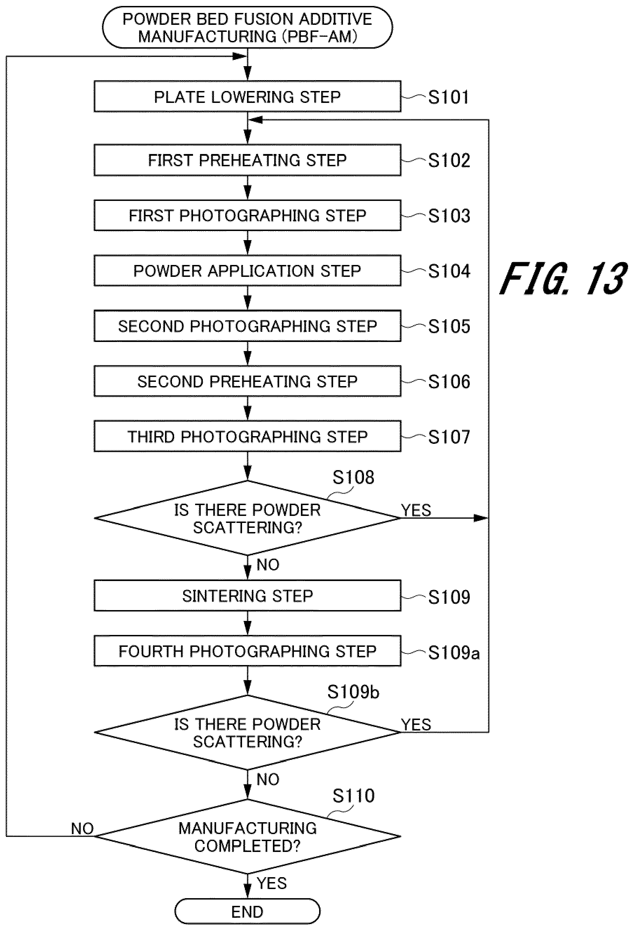

FIG. 13 is a flowchart showing a procedure of a characteristic processing operation of the three-dimensional PBF-AM apparatus according to the fifth embodiment of the present invention.

As shown in FIG. 13, the fifth embodiment of the present invention is different from the processing operation of the first embodiment (see FIG. 4) described above in that a fourth photographing step S109a and a second determination step S109b are provided between steps S109 and S110.

In the fourth photographing step S109a, the camera 42 photographs the manufactured surface 32b of the powder layer 32a, and outputs an image of the powder layer 32a generated by the photographing to the image processing unit 56. The image photographed by the camera 42 in the fourth photographing step S109a is an image (hereinafter, referred to as a "fourth image") indicating the state of the manufactured surface 32b of the powder layer 32a immediately after the sintering step S109. The fourth image is taken into the image processing unit 56.

On the other hand, in the second determination step S109b, the second determination unit 60 determines the presence or absence of powder scattering in the sintering step S109 using the above-described fourth image. The step in which powder scattering is likely to occur is the second preheating step S106, but powder scattering may also occur extremely rarely in the sintering step S109. When powder scattering occurs in the sintering step S109, a linear trace remains on the manufactured surface 32b of the powder layer 32a in parallel with the scanning direction of the electron beam 15. Therefore, the second determination unit 60 checks whether the linear trace remains in the fourth image. Then, when the linear trace remains in the fourth image, the second determination unit 60 determines that powder scattering has occurred in the sintering step S109. In this case, the process returns from step S109b to step S102. When no linear trace remains in the fourth image, the second determination unit 60 determines that powder scattering has not occurred in the sintering step S109. In this case, the process proceeds from step S109b to step S110 .

As described above, in the fifth embodiment of the present invention, the presence or absence of powder scattering in the sintering step S109 is determined by the second determination unit 60 in the second determination step S109b. This makes it possible to automatically detect the occurrence of powder scattering not only in the second preheating step S106 but also in the sintering step S109. Furthermore, when it is determined in the second determination step S109b that there is powder scattering, the manufacturing work after the powder scattering occurs can be suitably continued by operating the three-dimensional PBF-AM apparatus 10 in a mode different from the basic processing operation (see FIG. 3) described above. As a result, it is possible to suppress the occurrence of defects in the manufactured object due to powder scattering.

In the fifth embodiment of the present invention, when it is determined by the second determination unit 60 that there is powder scattering, the control unit 50 performs the first preheating step S102, the powder application step S104, the second preheating step S106, and the sintering step S109 again for the current layer manufacturing. As a result, even when the laminated state of the powder layer 32a is disturbed by the occurrence of powder scattering in the sintering step S109, the laminated state of the powder layer 32a can be recovered to a favorable state by performing the first preheating step S102, the powder application step S104, the second preheating step S106, and the sintering step S109 again. Therefore, it is possible to suppress the occurrence of defects in the manufactured object.

In the fifth embodiment of the present invention, the fourth photographing step S109a and the second determination step S109b are provided between step S109 and step S110 with respect to the processing operation (FIG. 4) of the first embodiment, but the present invention is not limited thereto, and the fourth photographing step S109a and the second determination step S109b may be provided between step S109 and step S110 with respect to the processing operation (FIG. 6) of the second embodiment, the processing operation (FIG. 7) of the third embodiment, or the processing operation (FIG. 11) of the fourth embodiment.

When the fourth photographing step S109a and the second determination step S109b are provided between step S109 and step S110 with respect to the processing operation (FIG. 11) of the fourth embodiment, when it is determined by the second determination unit 60 that there is powder scattering twice or more in a row in the second determination step S109b, control may be performed such that the process returns to the first preheating step S102 and each step is performed again.

### Description of Reference Numerals

- 10, 10A: three-dimensional powder bed fusion additive manufacturing (PBF-AM) apparatus
- 14: beam irradiation device
- 15: electron beam
- 16: powder application device
- 22: build plate
- 26: plate moving device
- 32: metal powder (powder material)
- 32a: powder layer
- 32b: manufactured surface
- 38: manufactured object
- 42: camera
- 44: shutter
- 50: control unit
- 58: determination unit
- 60: second determination unit

## Claims

1. A three-dimensional powder bed fusion additive manufacturing apparatus, comprising:
a build plate (22);
a plate moving device (26) that moves the build plate (22) in an up-down direction;
a powder application device (16) that applies a powder material (32) onto the build plate (22) to form a powder layer (32a);
a beam irradiation device (14) that irradiates the build plate (22) or the powder layer (32a) with an electron beam (15);
a control unit (50) that controls the plate moving device (26), the powder application device (16), and the beam irradiation device (14) to form a manufactured object for one layer through a plate lowering step, a first preheating step, a powder application step, a second preheating step, and a sintering step, and to form a three-dimensional manufactured object (38) by laminating the manufactured object for one layer;
a camera (42) that photographs a manufactured surface (32b) of the powder layer (32a) to generate an image of the powder layer (32a); and
a determination unit (58) that determines presence or absence of powder scattering in the second preheating step using at least a third image that is an image of the powder layer (32a) photographed by the camera (42) after the second preheating step and before the sintering step among a first image that is an image of the powder layer (32a) photographed by the camera (42) after the first preheating step and before the powder application step, a second image that is an image of the powder layer (32a) photographed by the camera (42) after the powder application step and before the second preheating step, and the third image.

2. The three-dimensional powder bed fusion additive manufacturing apparatus according to claim 1,
wherein the determination unit (58) determines presence or absence of the powder scattering based on a comparison result between the first image and the third image and a comparison result between the second image and the third image.

3. The three-dimensional powder bed fusion additive manufacturing apparatus according to claim 1,
wherein the determination unit (58) determines presence or absence of the powder scattering based on a comparison result between the second image and the third image.

4. The three-dimensional powder bed fusion additive manufacturing apparatus according to claim 1,
wherein the determination unit (58) determines presence or absence of the powder scattering based on the third image.

5. The three-dimensional powder bed fusion additive manufacturing apparatus according to any preceding claim,
wherein the camera (42) is a visible light camera.

6. The three-dimensional powder bed fusion additive manufacturing apparatus according to any preceding claim, further comprising
a second determination unit (60) that determines presence or absence of powder scattering in the sintering step using a fourth image that is an image of the powder layer (32a) photographed by the camera (42) after the sintering step.

7. The three-dimensional powder bed fusion additive manufacturing apparatus according to any preceding claim,
wherein, when it is determined by the determination unit (58) that there is powder scattering, the control unit (50) performs the first preheating step, the powder application step, and the second preheating step again for current layer manufacturing.

8. The three-dimensional powder bed fusion additive manufacturing apparatus according to any preceding claim,
wherein, when it is determined by the determination unit (58) that there is the powder scattering, the control unit (50) performs the sintering step for current layer manufacturing after reserving a condition to be applied to next layer manufacturing with a content different from a condition to be applied when there is no powder scattering, and performs the plate lowering step, the first preheating step, the powder application step, the second preheating step, and the sintering step for the next layer manufacturing according to the reserved condition.

9. The three-dimensional powder bed fusion additive manufacturing apparatus according to claim 8,
wherein the reservation of the condition applied to the manufacturing for next layer manufacturing is at least one of a reservation for extending an execution time of the first preheating step, a reservation for increasing a heating target temperature of the first preheating step, and a reservation for enhancing energy applied to the powder layer (32a) in the sintering step.

10. The three-dimensional powder bed fusion additive manufacturing apparatus according to claim 8,
wherein, when it is determined by the determination unit (58) that there is powder scattering twice or more in a row, the control unit (50) performs the first preheating step, the powder application step, and the second preheating step again for current layer manufacturing.

11. The three-dimensional powder bed fusion additive manufacturing apparatus according to claim 6,
wherein, when it is determined by the second determination unit (60) that there is powder scattering, the control unit (50) performs the first preheating step, the powder application step, the second preheating step, and the sintering step again for current layer manufacturing.

12. A three-dimensional powder bed fusion additive manufacturing method comprising:
a first preheating step of preheating a build plate (22) or a powder layer (32a) on the build plate (22);
a powder application step of applying a powder material (32) onto the build plate (22) to form a powder layer (32a) after the first preheating step;
a second preheating step of preheating the powder layer (32a) on the build plate (22) after the powder application step;
a sintering step of sintering the powder material (32) forming the powder layer (32a) after the second preheating step; and
a determination step of determining presence or absence of powder scattering in the second preheating step using at least a third image that is an image of the powder layer (32a) photographed by a camera (42) after the second preheating step and before the sintering step among a first image that is an image of the powder layer (32a) photographed by the camera (42) after the first preheating step and before the powder application step, a second image that is an image of the powder layer (32a) photographed by the camera (42) after the powder application step and before the second preheating step, and the third image.
